# EUROPEAN PATENT SPECIFICATION

(11) **EP 1 610 453 B1**
(45) Date of publication and mention of the grant of the patent: **11.08.2010**
(21) Application number: 05013487.3
(22) Date of filing: 22.06.2005
(51) Int. Cl.: H02M 7/48, H02J 7/34

(54) **Inverter device**
Umrichter
Dispositif onduleur

(30) Priority: 25.06.2004 JP 2004187609; 10.05.2005 JP 2005137151
(43) Date of publication of application: 28.12.2005
(73) Proprietor: SANYO ELECTRIC CO., LTD., Moriguchi-shi, Osaka (JP)
(72) Inventor: Kubo, Mamoru, Isesaki-shi Gunma 370-0113 (JP)
(74) Representative: Glawe, Delfs, Moll

(56) References cited:
- US-A1- 2003 034 761
- PATENT ABSTRACTS OF JAPAN vol. 2003, no. 11, 5 November 2003 (2003-11-05) & JP 2003 217883 A (MATSUSHITA ELECTRIC WORKS LTD; IKEDA ELECTRIC CO LTD), 31 July 2003 (2003-07-31)
- PATENT ABSTRACTS OF JAPAN vol. 1997, no. 06, 30 June 1997 (1997-06-30) & JP 09 056167 A (DENSO CORP), 25 February 1997 (1997-02-25)
- PATENT ABSTRACTS OF JAPAN vol. 2003, no. 08, 6 August 2003 (2003-08-06) & JP 2003 102101 A (SUZUKI MOTOR CORP), 4 April 2003 (2003-04-04)

## Description

### BACKGROUND OF THE INVENTION

The present invention relates to an inverter device in which a switching unit is connected between a direct-current power supply and an inverter.

In recent years, as an air conditioning apparatus for an electric car, there has been developed an air conditioning apparatus on which an electromotive compressor driven by a battery power supply is mounted. This air conditioning apparatus comprises: a battery (direct-current power supply); an inverter device; and an electromotive compressor. The inverter device comprises: a switch connected to a plus side of the battery; a charging unit connected in parallel with this switch; an inverter main circuit connected between plus and minus sides of the battery in a subsequent stage, and comprising a switching element group; a capacitor connected to a previous stage of this inverter main circuit; and the like.

The switching element group of the inverter main circuit converts a direct-current voltage into a three-phase alternating-current voltage, and applies the voltage to the electromotive compressor to drive a motor of the electromotive compressor. The capacitor stably supplies the voltage to the switching element group. Moreover, the charging unit has a resistance, and suppresses a rush current flowing through the capacitor, when applying the direct-current voltage of the battery. That is, by presence of the resistance, the switch is opened, and the charging unit is closed to pass the current via the resistance at the time of connection of the battery. Accordingly, the rush current is inhibited from being generated, when the voltage of the battery is applied (see Japanese Patent No. 3341327).

Moreover, in this type of the inverter device, in a case where the battery, which is the direct-current power supply, is connected to the plus and minus sides in reverse by mistake, the apparatus is largely damaged. Therefore, a diode is usually connected to the previous stage of the switch and charging unit, or the inside of the charging unit, and this diode prevents a reverse current from being passed through a circuit in a case where the battery is connected in reverse (see Japanese Patent Nos. 3261781 and 3379367).

As described above, the diode has heretofore been connected to a plus line from the power supply to thereby take a countermeasure against the reverse connection. However, in a circuit through which a large current flows as in the electromotive compressor for the electric car, a power loss in the diode increases in a normally connected state. Moreover, since there occurs a temperature rise by heat generation, there has been a problem that a countermeasure should be taken against heat discharge of the diode.

US 2003/034761 A1 discloses:
An inverter device in which a switching unit is connected between a direct-current power supply and an inverter main circuit, the device comprising:
   - a voltage detection circuit which detects a voltage of a previous stage of the switching unit;
   - a control unit which controls the switching unit; and
   - a voltage input circuit, which inputs into the control unit the voltage detected by the voltage detection circuit,
   - the control unit prohibits a closed circuit of the switching unit in a case where the voltage input from the voltage input circuit indicates a predetermined abnormal value.

### Summary of invention

The present invention has been developed in order to solve the problem of the conventional technique, and an object thereof is to provide an inverter device by which a diode for a countermeasure against reverse connection of a direct-current power supply can be abolished.

These objects are solved by the features of claim 1. Advantages embodiments are mentioned in the subclaims.

### BRIEF DESCRIPTION OF THE DRAWINGS

FIG. 1 is an electric circuit diagram of one embodiment of an air conditioning apparatus for an electric car, which is provided with an inverter device of the present invention (Embodiment 1); and
FIG. 2 is an electric circuit diagram of one embodiment of an air conditioning apparatus for an electric car, which is provided with another embodiment of the inverter device of the present invention (Embodiment 2).

### DETAILED DESCRIPTION OF THE PREFERRED EMBODIMENT

Embodiments of the present invention will be described hereinafter in detail with reference to the drawings.

### (Embodiment 1)

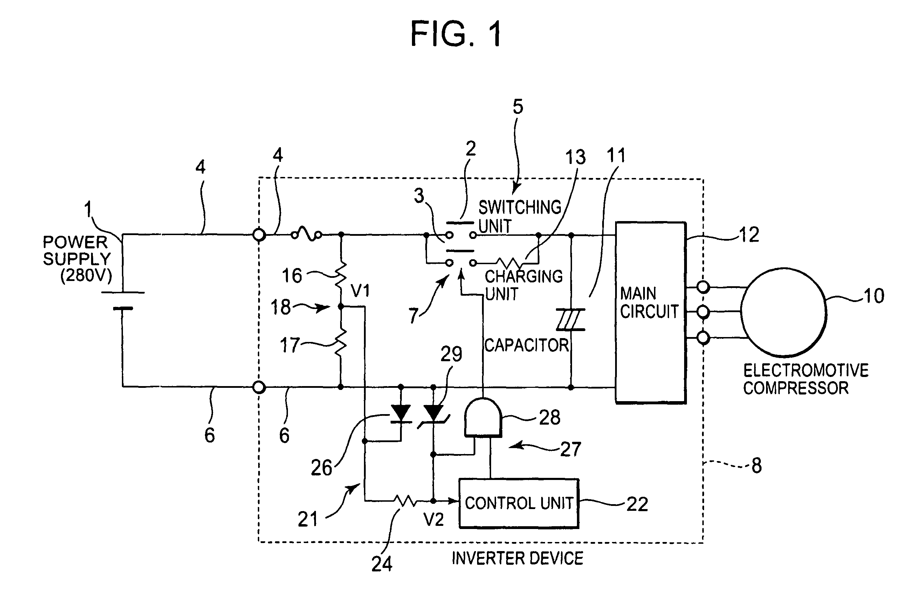

FIG. 1 shows a power supply circuit diagram of an air conditioning apparatus for an electric car according to one embodiment provided with an inverter device 8 of the present invention.

In FIG. 1, reference numeral 1 denotes a main battery which is a direct-current power supply of the electric car, and the battery supplies power to an electromotive compressor 10 of the air conditioning apparatus via the inverter device 8 of the present invention. A direct-current voltage is output from the battery 1, but the voltage is converted into a three-phase alternating current by an inverter main circuit 12 of the inverter device 8 described later, and supplied to a motor of the electromotive compressor 10.

The above-described inverter device 8 comprises: a switching unit 5 comprising a switch 2 and a charging unit 7; a capacitor 11; an inverter main circuit 12; a control unit 22 and the like.

In the inverter main circuit 12, a switching element group for converting the voltage into a three-phase alternating-current voltage by switching is disposed in a molded package. The switching element group comprises: switching elements; and a diode for switching surge absorption, and is connected between a plus line 4 (e.g., about DC +280 V) and a ground (GND) line 6 of the circuit.

Moreover, the switch 2 is connected to the plus line 4 between the battery 1 and the inverter main circuit 12. The capacitor 11 stably supplies the voltage to the inverter main circuit 12, and is connected between the plus line 4 and the GND line 6 between the switch 2 and the inverter main circuit 12. An electric charge is supplied to the capacitor 11 from the battery 1 via the charging unit 7.

The charging unit 7 comprises a series circuit of a switch 3 and a resistance 13, and is connected in parallel with the switch 2. These switch 2 and charging unit 7 constitute the switching unit 5 of the present invention. This charging unit 7 suppresses a rush current flowing through the capacitor 11, and a rush voltage generated in the capacitor 11 during the applying of the voltage of the battery 1.

On the other hand, the inverter device 8 is provided with partial-pressure resistances 16, 17 for detecting the voltage of the previous stage of the switch 2. That is, the series circuit of the resistances 16, 17 is connected between the plus line 4 and the GND line 6 of the previous stage (battery 1 side) of the switch 2, and these resistances 16, 17 constitute a voltage detection circuit 18 of the present invention.

In this case, a resistance value of the resistance 16 is sufficiently larger than that of the resistance 17 connected on a GND line 6 side. Accordingly, for example, a voltage of about 1/100 of the voltage connected between the plus line 4 and the GND line 6 appears in a connection point between the resistances 16, 17. Moreover, a terminal voltage (detected voltage of the voltage detection circuit 18) V1 of the resistance 17, which is the voltage of the connection point between the resistances 16, 17, is input into the control unit 22 via a voltage input circuit 21 of the present invention. This control unit 22 comprises a general-purpose microcomputer, and is a controller of the inverter device 8. The unit controls opening/closing or the like of the switches 2, 3, and brings the GND line 6 into ground (GND). An output voltage V2 of the voltage input circuit 21, which changes in accordance with the terminal voltage V1 of the resistance 17 of the voltage detection circuit 18 as described later, is input into the control unit 22, and the control unit 22 judges reverse connection of the battery 1 based on this output voltage V2.

This voltage input circuit 21 comprises: a resistance 24 whose one end is connected to the connection point between the resistances 16, 17; a diode 26 connected between the connection point between the resistances 16, 17, and the GND line 6; and a Zener diode 29 connected between the other end of the resistance 24, and the GND line 6. As to the diode 26, a direction of the connection point between the resistances 16, 17 is regarded as a forward direction. Moreover, the voltage (i.e., a terminal voltage of the Zener diode 29) V2 of the other end of the resistance 24 is an output voltage of the voltage input circuit 21, and is connected to an input of the control unit 22.

Moreover, a control output of the control unit 22 for the switching unit 5 is one input of an AND gate 28 constituting a gate circuit 27. It is to be noted that, although not shown, AND gates 28 (two gates in total) are disposed for controlling the switches 2, 3 of the charging unit 7, and control outputs of the control unit 22 for the switches 2, 3 are input into one input of the AND gate 28, respectively. This gate circuit 27 comprises two AND gates 28, and the output voltage V2 of the voltage input circuit 21, which is a voltage (i.e., the terminal voltage of the Zener diode 29) of the other end of the resistance 24, is the other input of each AND gate 28.

Next, an operation of the inverter device 8 constituted as described above will be described according to the present invention.

### (1) Operation at Normal Time

First, the battery 1 is normally connected. When the plus side of the battery 1 is connected to the plus line 4, and the GND side is connected to the GND line 6, the plus line 4 indicates, for example, DV +280 V, and the GND line 6 indicates zero volt (V). In this case, the terminal voltage V1 of the resistance 17 constituting the voltage detection circuit 18 has a potential (plus potential) of about +2.8 V obtained by dividing +280 V into 1/100. Moreover, this terminal voltage V1 enters the control unit 22 and the other input of each AND gate 28 via the voltage input circuit 21. In this case, the output voltage V2 of the voltage input circuit 21 is about +2.8 V, because approximately V1 = V2 is established. It is to be noted that the terminal voltage V1 is higher than +3 V in a case where the voltage between the plus line 4 and the GND line 6 rises higher than, for example, +300 V for a certain cause such as a regenerative current of a motor for running of the electric car. Even if the output voltage V2 becomes higher than +5 V, the Zener diode 29 defines the voltage at +5 V. This is a power supply voltage, for example, of the control unit 22 or the gate circuit 27. A voltage which is not less than that of the power supply is prevented from being input into the control unit 22 or the gate circuit 27, and destruction of the unit or the circuit is prevented.

The control unit 22 judges that the battery 1 is normally connected, and starts controlling the switching unit 5 in a case where the voltage (output voltage V2) input from the voltage input circuit 21 is +2.8 V (a potential of +2 V or more and +3 V or less is an "H" potential in the embodiment, and this also applies to the following).

Moreover, the control unit 22 first sets the control output for the switch 2 to an "L" potential of zero V (this also applies to the following), and sets the control output for the switch 3 to the "H" potential in this state. In this case, since the other input of the AND gate 28 of the gate circuit 27 also indicates the "H" potential, the output of the AND gate 28 for the switch 3 turns to "H", and the only switch 3 is closed (closed circuit).

When the switch 3 is closed, the current from the battery 1 flows through the capacitor 11 via the resistance 13 of the charging unit 7 to charge the capacitor. Since the resistance 13 suppresses a value of the current flowing through the capacitor 11, the rush current is suppressed, and the capacitor 11 can be protected.

Next, the control unit 22 sets the control output for the switch 2 to the "H" potential at a timing (e.g. three seconds after the switch 3 is closed, etc.) when the charging of the capacitor 11 is completed. In this case, since the other input of the AND gate 28 of the gate circuit 27 has the "H" potential, the output of the AND gate 28 for the switch 2 turns to "H", and the switch 2 is closed.

For example, one second after the switch 2 is closed, the control unit 22 sets the control output for the switch 3 of the charging unit 7 to "L" to set the output of the AND gate 28 to "L". When and after the switch 3 is opened (opened circuit), the voltage of the battery 1 is applied to the switching element group of the inverter main circuit 12 via the switch 2. Moreover, the control unit 22 controls ON/OFF of the switching element group of the inverter main circuit 12, generates the three-phase alternating-current voltage at a predetermined frequency to apply the voltage to the motor of the electromotive compressor 10, and drives the motor at the driving frequency. Accordingly, air in a car chamber is conditioned.

### (2) Reverse Connection Time

Next, when the battery 1 is connected in reverse, that is, the GND side of the battery 1 is connected to the plus line 4, and the plus side thereof is connected to the GND line 6, the GND line 6 is constantly judged to be the GND in the control, therefore the GND line 6 similarly indicates zero V, and DC -280 V appears in the plus line 4. Therefore, the terminal voltage V1 of the resistance 17 constituting the voltage detection circuit 18 is a potential (minus potential) of about -2.8 V obtained by dividing -280 V. Moreover, this terminal voltage V1 is input into the control unit 22 via the voltage input circuit 21. The terminal voltage V1 indicating a minus potential is clamped by the diode 26 to indicate approximately zero V (in actual, a slightly minus potential). Therefore, in this case, the output voltage V2 of the voltage input circuit 21 is approximately zero V.

When the voltage (output voltage V2) input from the voltage input circuit 21 is zero V, the control unit 22 judges that the battery 1 is connected in reverse, and stops the control of the switching unit 5. That is, the control unit 22 constantly sets the control outputs for the switches 2, 3 to "L", and prohibits the switches from being closed (closed circuit). This avoids beforehand a disadvantage that the reverse voltage is applied to the capacitor 11 or the inverter main circuit 12 to cause damages. Especially at the reverse connection time, the potential (V2) input into the control unit 22 from the voltage input circuit 21 is not V1 of -2.8 V as such, but approximately zero V. Therefore, the control unit 22 can normally function to perform judgment/control. Moreover, in this case, the control unit 22 gives a predetermined warning to warn a user of the reverse connection of the battery 1.

It is to be noted that when the output voltage V2 of the voltage input circuit 21 is zero V, the other input of each AND gate 28 of the gate circuit 27 indicates an "L" potential of zero V. Therefore, even if the control unit 22 malfunctions, and the outputs for controlling the switches 2, 3 indicate "H", the output of each AND gate 28 does not turn to "H". Therefore, even at an abnormal time of the control unit 22, the reverse current can be securely prevented from flowing through the capacitor 11 or the inverter main circuit 12.

It is to be noted that in the embodiment the resistance 24 is connected to the input of the control unit 22, but the present invention is not limited to the embodiment, and the resistance may be connected between the input of the control unit 22 and the other input of the AND gate 28. Moreover, in the present embodiment, the inverter device of the present invention is applied to the control of the electromotive compressor of the air conditioning apparatus for the electric car, but the present invention is not limited to the embodiment, and the present invention is effective for various inverter devices which produce an alternating-current voltage at a predetermined frequency from a direct-current power supply such as a battery.

### (Embodiment 2)

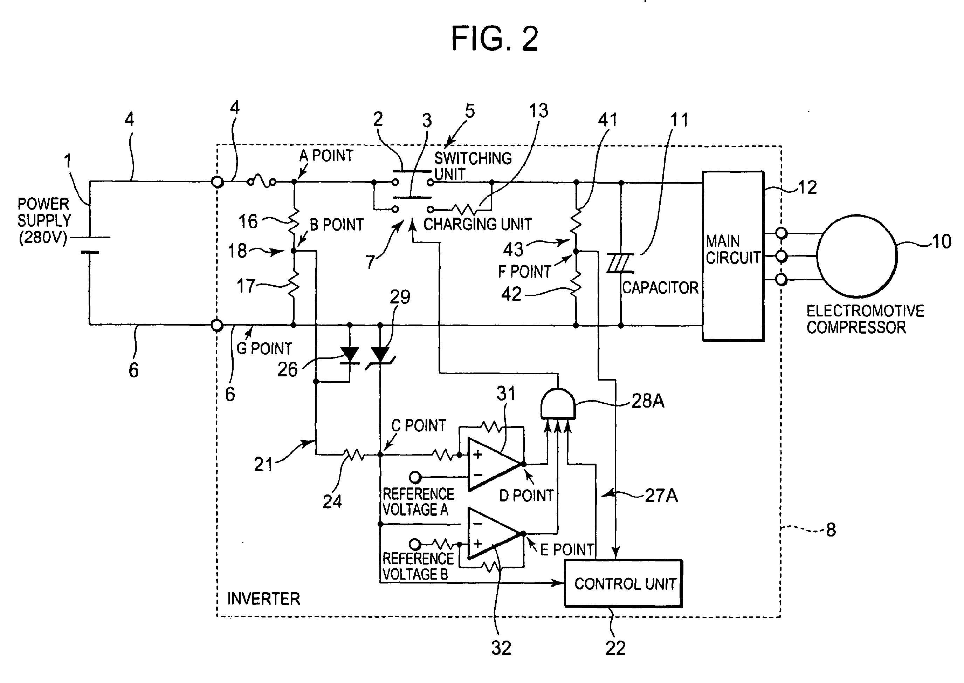

Next, another embodiment of the inverter device 8 will be described according to the present invention. FIG. 2 shows a power supply circuit diagram of an air conditioning apparatus for an electric car according to the present embodiment. It is to be noted that in FIG. 2, components denoted with the same reference numerals as those of FIG. 1 produce the same or similar effect, and the description thereof is omitted.

In FIG. 2, reference numerals 41, 42 denote partial-pressure resistances for detecting a voltage of a subsequent stage of a switch 2. That is, a series circuit of resistances 41, 42 is connected between a plus line 4 and a GND line 6 in a position between the resistances and a main circuit 12 in a subsequent stage of the switch 2. These resistances 41, 42 constitute a voltage detection circuit 43.

A resistance value of the resistance 41 connected to a plus line 4 side is sufficiently larger than that of the resistance 42 connected to a GND line 6 side. Accordingly, for example, a voltage of about 1/10 of the voltage appearing between the plus line 4 and the GND line 6 in the subsequent stage of the switch 2 appears in a connection point (F point) between the resistances 41, 42. Moreover, a terminal voltage (detected voltage of the voltage detection circuit 43) V3, which is a voltage of the connection point (F point) between the resistances 41, 42, is input into a control unit 22.

In this case, when the switch 2 is opened in a state in which a capacitor 11 completely discharges electricity, the terminal voltage V3 of the resistance 42, which is input into the control unit 22, is 0 (GND). The voltage V3 is approximately voltage V1 (there is some voltage drop) in a state in which the battery 1 is connected, and the switch 2 is closed. Accordingly, an opened/closed state of the switch 2 can be detected from a resistance 17 input into the control unit 22, and the terminal voltages V1, V3 of the resistance 42. It is to be noted that the control unit 22 actually judges the voltage V1 based on a voltage V2 described later. That is, when the battery 1 is connected, and the control unit 22 performs a control in such a manner as to open the switch 2, but the voltage V3 equal to the voltage V1 appears, it can be judged that the switch 2 is so-called fused, and closed. Conversely, although the switch 2 is controlled in such a manner as to be closed, the voltage V3 equal to the voltage V1 does not appear, and it can be judged that the switch 2 is not closed by an operation defect. When it is judged that these abnormalities are generated, the control unit 22 issues a predetermined alarm.

Moreover, in the present embodiment, a voltage input circuit 21 is provided with: a resistance 24 whose one end is connected to a connection point (B point) between resistances 16, 17; and a diode 26 connected between the connection point (B point) between resistances 16, 17, and the GND line 6. A Zener diode 29 is connected between the other end of the resistance 24, and the GND line 6. Moreover, a voltage (voltage of C point, i.e., terminal voltage of the Zener diode 29) V2 of the other end of the resistance 24 is an output voltage of the voltage input circuit 21. The voltage is connected to an input of the control unit 22. Moreover, the voltage is input into a + input terminal (non-reverse input terminal) of a comparator 31 comprising an OP amplifier. The voltage is similarly input into a - input terminal (reverse input terminal) of a comparator 32 comprising an OP amplifier. For example, a reference voltage A of +2 V is input into the - input terminal of the comparator 31, and a reference voltage B of +3 V is input into the + input terminal of the comparator 32.

Moreover, it is assumed that a control output of the control unit 22 for a switching unit 5 is one of three inputs of an AND gate 28A constituting a gate circuit 27A in this case. It is to be noted that, although not shown, AND gates 28A (two gates in total) are disposed for controlling the switches 2, 3 of the charging unit 7, and control outputs of the control unit 22 for the switches 2, 3 are input into one of the three inputs of each AND gate 28A, respectively. An output (voltage of D point) of the comparator 31 is connected to another input of each AND gate 28A, and an output (voltage of E point) of the comparator 32 is connected to another input of each AND gate 28A.

Furthermore, the output voltage V2 (voltage of C point) of the voltage input circuit 21, which changes in accordance with the terminal voltage V1 of the resistance 17 of a voltage detection circuit 18 described later, is input into the control unit 22. When the output voltage V2 indicates a predetermined abnormal value, a closed circuit of the switching unit 5 is prohibited. That is, the control unit 22 judges that the output voltage V2 indicates the abnormal value in a case where the voltage is higher or lower than a predetermined normal range (the normal range is set to +2 V or more and +3 V or less in the present embodiment) (including a reverse connection time of the battery 1). Then, the closed circuit of the switching unit 5 (switches 2, 3) is prohibited by the control unit 22. Accordingly, the control unit 22 judges the low voltage, the high voltage, and the reverse connection of the battery 1.

Next, an operation of the inverter device 8 constituted as described above will be described according to the present embodiment.

### (1) Operation at Normal Time

First, the battery 1 is normally connected. When the plus side of the battery 1 is connected to the plus line 4, and the GND side is connected to the GND line 6, the plus line 4 indicates, for example, DV +280 V, and the GND line 6 indicates zero volt (V). In this case, the terminal voltage V1 of the resistance 17 constituting the voltage detection circuit 18 has a potential (plus potential) of about +2.8 V obtained by dividing +280 V into 1/100. Moreover, this terminal voltage V1 enters the control unit 22 and the respective comparators 31, 32 via the voltage input circuit 21. In this case, the output voltage V2 of the voltage input circuit 21 is about +2.8 V, because approximately V1 = V2 is established.

Moreover, in this case, when the voltage (output voltage V2) input into the control unit 22 and the respective comparators 31, 32 from the voltage input circuit 21 is +2.8 V (potential of +2 V or more and +3 V or less is assumed as an "H" potential in the present embodiment, this also applies the following), either of outputs of the respective comparators 31, 32 indicates the "H" potential, and the "H" potential is input into each AND gate 28A from the respective comparators 31, 32.

Furthermore, in this case, the control unit 22 judges that the battery 1 is normally connected, and starts controlling the switching unit 5. The control unit 22 first sets the control output for the switch 2 to an "L" potential of zero V (this also applies to the following), and sets the control output for the switch 3 to the "H" potential in this state. In this case, since any of the inputs of the AND gate 28A of the gate circuit 27A also indicates the "H" potential, the output of the AND gate 28A for the switch 3 turns to "H", and the only switch 3 is closed (closed circuit).

When the switch 3 is closed, the current from the battery 1 flows through the capacitor 11 via the resistance 13 of the charging unit 7 to charge the capacitor. Since the resistance 13 suppresses a value of the current flowing through the capacitor 11, the rush current is suppressed, and the capacitor 11 can be protected.

Next, the control unit 22 sets the control output for the switch 2 to the "H" potential at a timing (e.g. three seconds after the switch 3 is closed, etc.) when the charging of the capacitor 11 is completed. In this case, since any of the inputs of the AND gate 28A of the gate circuit 27A has the "H" potential, the output of the AND gate 28A for the switch 2 turns to "H", and the switch 2 is closed.

For example, one second after the switch 2 is closed, the control unit 22 sets the control output for the switch 3 of the charging unit 7 to "L" to set the output of the AND gate 28A to "L". When and after the switch 3 is opened (opened circuit), the voltage of the battery 1 is applied to the switching element group of the inverter main circuit 12 via the switch 2. Moreover, the control unit 22 controls ON/OFF of the switching element group of the inverter main circuit 12, generates the three-phase alternating-current voltage at a predetermined frequency to apply the voltage to the motor of the electromotive compressor 10, and drives the motor at the driving frequency. Accordingly, air in a car chamber is conditioned.

### (2) High-Voltage Abnormal Time

Next, when the voltage between the plus line 4 and the GND line 6 exceeds +300 V for a certain cause such as a regenerative current of a motor for running of the electric car, and rises to an abnormally high voltage, for example, +500 V, the terminal voltage V1 indicates +5 V. Moreover, the output voltage V2 of the voltage input circuit 21 enters the control unit 22 and the respective comparators 31, 32. It is to be noted that, in this case, the voltage between the plus line 4 and the GND line 6 is +500 V or less, and the terminal voltage V1 indicates +5 V or less which is obtained by dividing the voltage into 1/100. In this case, definition of the Zener diode 29 described later is not applied, and the output voltage V2 of the voltage input circuit 21 substantially has a relation of V1 = V2.

When the voltage (output voltage V2) input into the control unit 22 and the respective comparators 31, 32 from the voltage input circuit 21 exceeds +3 V, the control unit 22 judges that the voltage is abnormally high, and stops the control of the switching unit 5. That is, the control unit 22 constantly sets the control outputs for the switches 2, 3 to "L", and prohibits the switches from being closed (closed circuit).

In this case, the output of the comparator 31 turns to "H", but the output of the comparator 32 is "L" (because the voltage of the - input terminal of the comparator 32 is higher than a reference potential B (+3 V) input into the + input terminal). Accordingly, the "H" potential is input from the comparator 31, and the "L" potential is input from the comparator 32 into each AND gate 28A.

That is, since the output of the comparator 32 is "L", the output of the AND gate 28A of the gate circuit 27A is "L" regardless of the outputs of the control unit 22 and the comparator 31. Thus, when the voltage between the plus line 4 and the GND line 6 rises to the abnormally high voltage, the output of the AND gate 28A can be controlled by the output of the comparator 32 in addition to the output of the control unit 22. Therefore, even if the control unit 22 malfunctions, the control outputs for the switches 2, 3 are constantly set to "L", and the switches can be securely prohibited from being closed (closed circuit) by the output of the "L" potential from the comparator 32. Consequently, it is possible to prevent a disadvantage that the high voltage is applied to each apparatus including the main circuit 12 to break the apparatus. Moreover, in this case, the control unit 22 raises a predetermined alarm, and warns the user of the high-voltage abnormality.

It is to be noted that when the voltage between the plus line 4 and the GND line 6 rises, for example, to +500 V or more, the terminal voltage V1 is higher than +5 V, but the Zener diode 29 defines the output voltage V2 at +5 V. Consequently, the control unit 22 or the comparators 31, 32 and the gate circuit 27A can be protected from the high voltage, and can be prevented beforehand from being broken.

### (3) Low Voltage Abnormal Time

Next, when the voltage between the plus line 4 and the GND line 6 drops below +200 V for a certain cause, the terminal voltage V1 is lower than +2 V. Moreover, the terminal voltage V1 enters the control unit 22 and the respective comparators 31, 32 via the voltage input circuit 21. In this case, the output voltage V2 of the voltage input circuit 21 substantially has a relation of V1 = V2.

When the voltage (output voltage V2) input into the control unit 22 and the respective comparators 31, 32 from the voltage input circuit 21 is lower than +2 V, the control unit 22 judges abnormality, and stops the control of the switching unit 5. That is, the control unit 22 constantly sets the control outputs for the switches 2, 3 to "L", and prohibits the switches from being closed (closed circuit).

Moreover, the output of the comparator 32 turns to "H", but the output of the comparator 31 is "L" (because the output is lower than a standard potential A (+2 V) input into the - input terminal of the comparator 31). Accordingly, the "L" potential is input from the comparator 31, and the "H" potential is input from the comparator 32 into each AND gate 28A.

That is, since the output of the comparator 31 is "L", the output of the AND gate 28A of the gate circuit 27A is "L" regardless of the outputs of the control unit 22 and the comparator 32. Thus, when the voltage drops below 2 V, the output of the AND gate 28A can be controlled by the output of the comparator 31 in addition to the output of the control unit 22. Therefore, even if the control unit 22 malfunctions, the control outputs for the switches 2, 3 are constantly set to "L", and the switches can be securely prohibited from being closed (closed circuit) by the output of the "L" potential from the comparator 31. Consequently, it is possible to prevent a disadvantage that the low voltage is applied to each apparatus including the main circuit 12 and the apparatus malfunctions and breaks. Moreover, in this case, the control unit 22 raises a predetermined alarm, and warns the user of the low-voltage abnormality.

### (4) Reverse Connection Time

Next, when the battery 1 is connected in reverse, that is, the GND side of the battery 1 is connected to the plus line 4, and the plus side thereof is connected to the GND line 6, the GND line 6 is constantly judged to be the GND in the control, therefore the GND line 6 similarly indicates zero V, and DC -280 V appears in the plus line 4. Therefore, the terminal voltage V1 of the resistance 17 constituting the voltage detection circuit 18 is a potential (minus potential) of about -2.8 V obtained by dividing -280 V. Moreover, this terminal voltage V1 is input into the control unit 22 and the respective comparators 31, 32 via the voltage input circuit 21. The terminal voltage V1 indicating a minus potential is clamped by the diode 26 to indicate approximately zero V (in actual, a slightly minus potential). Therefore, in this case, the output voltage V2 of the voltage input circuit 21 is approximately zero V.

When the voltage (output voltage V2) input from the voltage input circuit 21 into the control unit 22 and the respective comparators 31, 32 is zero V, the control unit 22 judges that the battery 1 is connected in reverse, and stops the control of the switching unit 5. That is, the control unit 22 constantly sets the control outputs for the switches 2, 3 to "L", and prohibits the switches from being closed (closed circuit). This avoids beforehand a disadvantage that the reverse voltage is applied to the capacitor 11 or the inverter main circuit 12 to cause damages. Especially at the reverse connection time, the potential (V2) input into the control unit 22 from the voltage input circuit 21 is not V1 of -2.8 V as such, but approximately zero V. Therefore, the control unit 22 can normally function to perform judgment/control.

Moreover, the output of the comparator 32 turns to "H", but the output of the comparator 31 turns to "L" (because the output is lower than the standard potential A (+2 V) input into the - input terminal of the comparator 31). Accordingly, the "L" potential is input from the comparator 31, and the "H" potential is input from the comparator 32 into each AND gate 28A.

That is, since the output of the comparator 31 is "L", the output of the AND gate 28A of the gate circuit 27A is "L" regardless of the outputs of the control unit 22 and the comparator 32. When the voltage is connected in reverse in this manner, the output of the AND gate 28A can be controlled by the output of the comparator 31 in addition to the output of the control unit 22. Therefore, even if the control unit 22 malfunctions, and the outputs for the control of the switches 2, 3 are "H", the output of each AND gate 28A is not set to "H" by the output of the "L" potential from the comparator 31. Therefore, even at the abnormality time of the control unit 22, a reverse current can be securely prevented from being passed through each apparatus including the capacitor 11, main circuit 12 or the like. Moreover, in this case, the control unit 22 raises a predetermined alarm, and warns the user of the reverse connection of the battery 1.

As described above in detail, according to the inverter device 8 of the present invention, it is possible to avoid beforehand a disadvantage that the reverse voltage flows through the apparatus including the main circuit 12 or the like to break the apparatus by the reverse connection, without connecting the diode to the plus line from the power supply as in the conventional example. Moreover, even when the voltage of the battery 1 abnormally rises or drops, it is possible to prevent the disadvantage that the abnormal voltage flows through the apparatus including the main circuit 12 or the like to break the apparatus.

Furthermore, there is disposed the gate circuit 27A for prohibiting the closed circuit of the switching unit 5 regardless of the output of the control unit 22. In this case, even if the control unit 22 malfunctions, the closed circuit of the switching unit 5 can be securely prohibited in a case where there is an abnormality in the voltage supplied from the battery 1.

It is to be noted that in the embodiment the resistance 24 is connected to the input of the control unit 22 in the same manner as in the first embodiment, but the present invention is not limited to the embodiment, and the resistance may be connected between the input of the control unit 22 and the other input of the AND gate 28A. Moreover, in the present embodiment, the inverter device of the present invention is applied to the control of the electromotive compressor of the air conditioning apparatus for the electric car, but the present invention is not limited to the embodiment, and the present invention is effective for various inverter devices which produce an alternating-current voltage at a predetermined frequency from a direct-current power supply such as a battery.

## Claims

1. An inverter device (8) in which a switching unit (5) is connected between a direct-current power supply (1) and an inverter main circuit (12), the device (8) comprising:
a voltage detection circuit (18) which detects a voltage of a previous stage of the switching unit (5);
a control unit (22) which controls the switching unit; and
a voltage input circuit (21) which inputs into the control unit the voltage detected by the voltage detection circuit (18),
**characterized in that** the device (8) further comprising
(1) a gate circuit (27) comprising an AND gate (28),
(2) one input of said AND gate (28) is the output of the control unit (22),
(3) the other input of the AND gate (28) is the output of the voltage input circuit (21),
(4) the gate circuit (27) prohibits the closed circuit of the switching unit (5) regardless of an output of the control unit (22) in a case where the voltage input from the voltage input circuit (21) into the control unit (22) indicates a predetermined abnormal value.

2. The inverter device according to claim 1,
wherein the control unit (22) judges that the voltage input from the voltage input circuit (21) indicates the abnormal value in a case where the voltage is higher or lower than a predetermined normal range.

3. The inverter device according to claim 1 or 2,
wherein the voltage input circuit (21) outputs a voltage of approximately zero volt in a case where the voltage detected by the voltage detection circuit (18) indicates a minus value.

## Patentansprüche

1. Invertervorrichtung (8), bei der eine Schalteinheit (5) zwischen eine Gleichstromversorgung (1) und eine Inverterhauptschaltung (12) geschaltet ist, wobei die Vorrichtung (8) aufweist:
eine Spannungsdetektorschaltung (18), die eine Spannung einer vorhergehenden Stufe der Schalteinheit (5) detektiert,
eine Steuereinheit (22), die die Schalteinheit steuert, und
eine Spannungseingabeschaltung (21), die in die Steuereinheit die durch die Spannungsdetektorschaltung (18) detektierte Spannung eingibt,
**dadurch gekennzeichnet, dass** die Vorrichtung (8) ferner aufweist
(1) eine Gatterschaltung (27) mit einem UND-Gatter (28),
(2) wobei ein Eingang des UND-Gatters (28) der Ausgang der Steuereinheit (22) ist,
(3) der andere Eingang des UND-Gatters (28) die Ausgabe der Spannungseingangsschaltung (21) ist,
(4) die Gatterschaltung (27) die geschlossene Schaltung der Schalteinheit
(5) unabhängig von einer Ausgabe der Steuereinheit (22) in einem Fall verhindert, in dem die Spannungseingabe von der Spannungseingabeschaltung (21) in die Steuereinheit (22) einen vorgegebenen abnormen Wert anzeigt.

2. Inverterschaltung nach Anspruch 1, wobei die Steuereinheit (22) beurteilt, dass die Spannungseingabe von der Spannungseingabeschaltung (21) einen abnormen Wert anzeigt, wenn die Spannung höher oder geringer als ein vorgegebener Normalbereich ist.

3. Inverterschaltung nach Anspruch 1 oder 2, wobei die Spannungseingabeschaltung (21) eine Spannung von etwa null Volt ausgibt, wenn die durch die Spannungsdetektorschaltung (18) detektierte Schaltung einen negativen Wert anzeigt.

## Revendications

1. Dispositif formant onduleur (8) dans lequel une unité de commutation (5) est raccordée entre une source de puissance à courant continu (1) et un circuit principal d'onduleur (12), le dispositif (8) comprenant :
un circuit de détection de tension (18) qui détecte une tension d'un étage précédent de l'unité de commutation (5) ;
une unité de commande (22) qui commande l'unité de commutation ; et
un circuit d'entrée de tension (21) qui introduit dans l'unité de commande la tension détectée par le circuit de détection de tension (18),
**caractérisé en ce que** le dispositif (8) comprend, en outre :
(1) un circuit logique (27) comprenant une porte ET (28),
(2) une première entrée de ladite porte ET (28) est la sortie de l'unité de commande (22),
(3) l'autre entrée de la porte ET (28) est la sortie du circuit d'entrée de tension (21),
(4) le circuit de porte (27) inhibe le circuit fermé de l'unité de commutation (5) indépendamment d'une sortie de l'unité de commande (22) dans un cas où l'entrée de tension à partir du circuit d'entrée de tension (21) dans l'unité de commande (22) indique une valeur anormale prédéterminée.

2. Dispositif formant onduleur selon la revendication 1,
dans lequel l'unité de commande (22) détermine que l'entrée de tension à partir du circuit d'entrée de tension (21) indique la valeur anormale dans un cas où la tension est supérieure ou inférieure à une plage normale prédéterminée.

3. Dispositif formant onduleur selon la revendication 1 ou 2,
dans lequel le circuit d'entrée de tension (21) délivre une tension approximativement égale à zéro volt dans un cas où la tension détectée par le circuit de détection de tension (18) indique une valeur négative.
